# EUROPEAN PATENT SPECIFICATION

(11) **EP 4 009 394 B1**
(45) Date of publication and mention of the grant of the patent: **06.12.2023**
(21) Application number: 20306510.7
(22) Date of filing: 07.12.2020
(51) Int. Cl.: H01M 4/04, H01M 4/134, H01M 4/36, H01M 4/38, H01M 4/66, H01M 10/0525, H01M 10/0562, H01M 4/02

(54) **ANTI-DENDRITE NEGATIVE ELECTRODES, AND THE ELECTROCHEMICAL CELLS CONTAINING THEM**
NEGATIVE ELEKTRODEN GEGEN DENDRITEN UND ELEKTROCHEMISCHE ZELLE, DIE SOLCHEN ELEKTRODEN UMFASST
ELECTRODES NEGATIVES ANTI-DENDRITES, ET CELLULES ELECTROCHIMIQUES LES CONTENANT

(43) Date of publication of application: 08.06.2022
(73) Proprietor: SAFT, 92300 Lavallois-Perret (FR)
(72) Inventor: JORDY, Christian, 33290 PAREMPUYRE (FR); KYLYVNYK, Kostyantyn, COCKEYSVILLE, MD 21030 (US); WATSON, Adam, COLUMBIA, MD 21045 (US)
(74) Representative: Lavoix

(56) References cited:
- WO-A2-2019/079258
- US-A1- 2020 144 599

## Description

The present invention concerns the field of energy storage, and particularly the field of batteries, such as lithium batteries.

Lithium-ion batteries are now widely used as they offer outstanding energy and volume densities; they are the first choice solution for portable electronic devices or electric and hybrid vehicles, energy storage systems (ESS).

Lithium-ion batteries involve the reversible exchange of the Lithium ions between the positive electrode and the negative electrode that are separated by a separator, and both electrodes intercalate/deintercalate Lithium Ions. In Lithium metal batteries the negative electrode comprises elemental lithium which deposits on the negative electrode during the charge, and dissolves during the discharge.

Solid-state batteries (SSBs) have been recently developed and offer promising prospects perspective for Li-ion batteries. It requires new materials and approaches. In particular, their assembling requires the application of high pressure (> 500MPa) and temperature (60-100°C) for densification and removing all voids and decreasing interface resistances. The use of negative electrodes containing metallic lithium during assembly is generally not possible due to the lithium metal softness, plastic deformation and change of the shape of Lithium. This makes it difficult to obtain the required level density and consequently, reduces the electrochemical performance.

Further, there has been extensive research on anode materials for Li-ion batteries. Many metals and alloys have advantages over carbon electrodes, such as high gravimetric and volumetric capacities, good conductivities and, as result, high current densities. However, metals and alloys generally increase the volume during lithiation, with an expansion of up to 100-300% compared with 6% for carbon. These constant expansions and contractions during charge and discharge result in pulverizing materials and very low cycleability. Further, in Li metal battery the quality of the lithium deposition is crucial in that an inhomogeneous coating can lead to dendrite formation and growth and can affect the mechanical properties associated with the volume variation of the electrode in particular.

Still further, US 2020/0176810 discloses an anode-free solid-state battery comprising an anti-dendrite functional layer along the solid electrolyte layer, and a scaffold layer along the anti-dendrite functional layer and the current collector. The functional layer can comprise metals, whereas the scaffold layer is composed of an organic material, metal oxide or metal-inorganic framework. An optional second anti-dendrite layer can be intercalated between the current collector and the scaffold layer. The scaffold layer intercalated between the two anti-dendrite layers. However, the scaffold layer has a relatively low lithium transportation ability and decreases the synergy between the 2 anti-dendrite layers leading to lower cycle life and lower chargeability.

Lee et al Nature Energy 5, 299-308 (2020) discloses an all-solid-state lithium metal battery comprising a negative electrode having a single Ag-C nanocomposite layer regulating the lithium deposition. However, this system has for drawback the high operating temperature and low C-rate during the charges (cycling was performed at 60 ° C and with fixed charge rate of C/10 for preventing dendrites). Dendrite formation is very sensitive to temperature and current density. It is generally suppressed at 60 °C and very low current densities <C/10 that corresponds to more than 10 hours charge. At room temperature, dendrites quickly appear during the charge, which partially or completely short-circuit the cell, the cell rapidly lose ability to charge and requires additional protection from dendrite formation.

WO 2019/079258 and US 2020/144599 disclose a negative electrode of an electrochemical cell comprising several coated layers.

It is therefore desired to provide improved negative electrodes which can suppress the dendrite formation. Additionally, electrochemical cells should inhibit the reductive decomposition of the solid-state electrolyte, allow high-pressure assembling, and provide high energy density.

The present invention therefore provides a negative electrode of an electrochemical cell comprising:
a current collector,
a number (n) of successively coated layers over the surface of the current collector, the successive coated layers being numbered (i), i being comprised between 1 and n, in this order from the current collector surface, wherein the layer (1) is the closest layer respective to the current collector and the layer (n) is the furthest layer respective to the current collector;
   wherein n is an integer, equal to or greater than 2, and equal to or lower than 4,
   wherein the layer (n) has an outer face and an inner face on the opposite side,
characterized in that each of the n coated layers, identical or different comprises one or more metals and/or metal alloys and/or metalloids and/or metalloid alloys,
in that the inner face of the layer (n) is in contact with the (n-1) layer immediately located beneath it and in that
the n layers are arranged so that layer (i+1) has a higher potential of lithiation than that of layer (i) which is immediately beneath it,
wherein the layer (n) comprises one or more metals selected from bismuth, indium, antimony and/or their alloys, and
the layer (1) closest to the current collector comprises one or more metals selected from zinc, magnesium and/or their alloys.

The term "negative electrode" designates when the accumulator is discharging, the electrode functioning as an anode and when the accumulator is charging, the electrode functioning as a cathode, the anode being defined as the electrode where an electrochemical oxidation reaction (emission of electrons) occurs, while the cathode is the seat of reduction.

Typically, the term negative electrode refers to the electrode from which electrons leave, and from which cations (Li+) are released in discharge.

The present negative electrode may be designated as a combination of Li-ion electrode and Li metal electrode. Initially during the first charge Li⁺ ions create Li metal alloy and thereafter, elemental Lithium metal is electroplated, as in the Li-metal battery.

The following embodiments described below are meant to be considered individually or in any of their combinations:
According to the invention, the negative electrode initially does not comprise metal Lithium, but includes lithium after the first charge:
- in the form of a lithiated metal alloy within at least one of the coated layers and/or
- in the form of a layer of elemental lithium plated between the current collector and the closest layer (1).

The layers are thus altered during the first cycling in that they are lithiated : their constituting metal or metalloid forms an alloy with lithium.

Said alloys are typically rich in lithium in that they comprise maximum amount lithium, for example Li_{4.4}Sn (990 mAh/g of Sn and 2100 mAh/cm³) or Li₃Mg (3350 mAh/g of Mg and 1770 mAh/cm³) and have maximal coefficient of lithium ions diffusion (diffusion in Li-Zn alloy electrodes prepared by different methods may vary from 10⁻⁷ to 10⁻⁹ cm² s⁻¹).

These alloys are mostly maintained during the further cycling, whereas the layer of metal lithium forms during charge and consumes during discharge.

Therefore, after the first cycling, the layers further include lithium alloys.

The negative electrode of the invention may also further comprise a layer of metal lithium plated between the current collector and the layer (1).

These lithium metal alloys layers are electron and lithium conductive, dense and robust enough to suppress dendrite formation.

According to an embodiment, the initial composition of each of the n layers is such that it can create an alloy with the highest coefficient of diffusion of Li⁺ ions, typically between 10⁻⁶ (LiAg alloy) and 10⁻⁸ cm² s⁻¹ by application or adaptation of the method described by Suzuki et al Electrochemistry 74(4), 303-308, 2006.

According to an embodiment, each of the n layers or the material constituting the same has a determined potential of lithiation. Typically, the layers are arranged in specific sequence based on the value of their respective potential of lithiation.

The potential of lithiation is defined as the affinity to form alloys with lithium. It is expressed in Volt and can be measured electrochemically by measuring the potential at which the reduction occurs. It is illustrated by the lithiophilicity of the material constituting each layer, (ie) its affinity for lithium and thus its ability to form alloys with lithium.

In particular, the layers are arranged so that there is a positive gradient of potential of lithiation from the current collector. In other words, layer (i+1) has a higher potential of lithiation than that of layer (i) which is immediately beneath it, meaning that the materials with lower potentials of lithiation are located closer to the current collector, whereas materials with higher potentials of lithiation are located further from the current collector.

According to one embodiment, the metals and/or alloys and/or metalloids and/or metalloids alloys can be chosen from the group comprising Mg, Al, Zn, Cd, Ti, Cr, Mn, Co, Fe, Ag, Au, In, Sn, Pb, Bi, Sb, Si, B, and the alloys thereof.

The metals having the higher potentials of lithiation include bismuth (0.85 V vs Li), indium (0.62V), Antimony (0.95 V) and similar.

Therefore, the layer (n) (ie) furthest from the current collector comprises one or more metals chosen from bismuth, indium, Antimony or their alloys thereof.

The metals having the lower potentials of lithiation include zinc (0.157 V), magnesium (0.03 V) and similar.

Therefore, the layer (1) closest to the current collector comprises zinc, magnesium and/or the alloys thereof.

Without being bound by theory, it is believed that the plurality of metal layers arranged according to the above gradient of potential of lithiation, together with their nature (high diffusion coefficients of Li⁺ ions) allow the effective diffusion of Li⁺ ions during charge through the layers towards the current collector, so as to uniformly deposit a layer of metal Lithium, deposited between the layers and the current collector.

The layers structure and/or their arrangement may have several roles and implications:
Mainly, they reduce the nucleation energy of lithium. They conduct lithium, in that they allow Li⁺ ions to transit from the electrolyte layer. In addition, they can also allow homogenization of the lithium deposit by allowing the formation of local batteries: in fact, during charging, a potential difference is created in the thickness of the electrode; this difference in potentials can then allow an electrochemical rebalancing on the thickness of the electrode by oxidation of metallic lithium in the most positive potential zones and a reduction of Li⁺ in the most negative potential zones.

The negative electrode structure according to the invention thus allows the elemental (ie) metal lithium to be deposited homogeneously on the current collector while greatly limiting the volume variations of the negative electrode.

It also can achieve maximal energy density because lithium provides maximal gravimetric and volumetric capacities, as the layers have small thickness, typically comprised between 0.05 and 20 µm, preferably between 0.2 and 10 µm, and a low weight, with a loading generally comprised between 0.1 and 10 mg/cm².

Usually, many active positive electrode materials exhibit an irreversible capacity loss of 5-30% during the first cycle. In carbon-based electrodes, this lithium is stored in the negative electrode and partially consumed for creation of the solid electrolyte interface (SEI) layer.

By contrast, according to the present invention, this excess of lithium after initial charge is mostly stored in Li-metal alloys. The capacity of lithium deposited between the layers and the current collector is equal or less than irreversible capacity loss from cathode. This creates the conditions when once lithiated and expanded during initial charge, the layers do not lose lithium and remain in their expanded state. The cycleability of the anode of the invention thus depends on the efficiency of lithium stripping and deposition, and does not depend on the expansion and/or contraction of the layers. In some cases if the amount of Li excess from the positive electrode is not enough, the positive or negative electrode can be additionally pre-lithiated before assembling.

After initial lithiation during the first charge, the layers include the corresponding Li alloys. These Li alloys layers inhibit the reductive decomposition of the solid electrolyte that are not thermodynamically stable in contact with fresh Li. Thus, the Li alloys containing layers suppress the dendrite formation, increase the efficiency of cycling Lithium, and prevent the reactivity with electrolytes.

According to a further embodiment, the negative electrode does not include metal lithium during its assembly: thus, it can be pressed in the high-pressure conditions. Thus, the negative electrode does not comprise metal lithium following its assembly, in its initial stage (ie) before its first cycle.

The term "current collector" is understood to mean an element such as a pad, plate, foil, sheet, mesh, tissue or other, made of a conductive material, connected to the positive or negative electrode, and ensuring the conduction of the flow of electrons between the electrode and the terminals of the battery

Typically, the current collector consists in a material or alloy chosen from the group consisting in copper, nickel, carbon, stainless steel, and the alloys thereof. Mostly, the negative current collector is composed of materials with high electron conductivity, which do not form easily lithium alloys, but can be used as a support for lithium plating.The current collector is preferably a two-dimensional conductive support such as a solid or perforated strip, based on material for example copper, nickel, steel, carbon stainless steel and/or alloys thereof. Said negative electrode collector can be in the form of a foil or mesh, woven or non-woven. It is generally in the form of a copper foil.

According to an embodiment, the negative electrode comprises at least two layers (n=2) up to 4 layers, typically 2 layers coated onto current collector.

According to an embodiment, the outer face of layer (n) has an increased surface area for decreasing interface resistance between layer (n) and solid-state electrolyte and decreasing real current density.

Typically, the increased surface area defines a matte, rough and/or etched surface. The increased surface area may typically be achieved by a suitable treatment, such as etching, such as focused ion beam etching, plasma surface etching or other etching techniques following the coating of the (n) layer and prior to the assembly of the electrochemical cell.

According to a further object, the present invention concerns a process of manufacture of the negative electrode according to the invention, wherein said process comprises :
- coating the closest layer (1) on the current collector, and
- successively coating each following coated layer (i) until layer (n) is coated, and wherein each coating step is identical or different.

The terms "coating" or "coated" used herein refers to any kind of deposition of the layers. This coating can be achieved and is carried out by a technique typically selected from coating, plating, spattering, electroplating, electroless deposition, thermal spray coating, cold gas dynamic spraying, physical or chemical deposition, mechanical attachment.

Alternatively, it can also be achieved by
- chemical deposition: sol-gel, centrifugal coating or spin-coating, vapor deposition, atomic layer deposition ALD, molecular layer deposition MLD; and
- physical vapor deposition (PVD): vacuum evaporation, sputtering, pulsed laser deposition, electrohydrodynamic deposition.

In particular, the layers on the top of current collectors can be deposited with good efficiency and productivity by electroplating, electroless deposition, thermal spray coating, cold gas dynamic spraying and slurry coating.

According to a further object, the present invention also concerns an electrochemical cell which comprises:
- A positive electrode;
- A negative electrode according to the invention; and
- A solid-based electrolyte layer as a separator between the positive and the negative electrodes.

By "electrochemical element" is meant an elementary electrochemical cell made up of the positive electrode / electrolyte / negative electrode assembly, allowing the electrical energy supplied by a chemical reaction to be stored and returned in the form of current.

Typically, such an electrochemical element comprises a negative electrode layer, a positive electrode layer and an electrolyte layer.

In the context of the present invention, the positive electrode can be of any known type.

The term positive electrode refers to the electrode where electrons enter, and where cations (Li⁺) arrive in discharge.

The positive electrode generally consists of a conductive medium used as a current collector which is coated with the mixture comprising particles of positive electrode active material, solid-state electrolyte particles and an electrically conductive additive. This electrically conductive additive can be chosen from micron-scale steel fiber, a carbon fiber, graphite, carbon nano or micro powders, carbon nano tubes and even electron conductive polymers. It is generally distributed in the electrode so as to form an electronic percolating framework between all the particles of active material and the current collector. Typically, the positive electrode can also include a binder.

The binder may be useful to improve the cohesion between the particles of active material and to improve the adhesion to the current collector. The binder may be selected from : polyvinylidene fluoride (PVDF) and the copolymers thereof, polytetrafluoroethylene (PTFE) and the copolymers thereof, polyacrylonitrile (PAN), poly(methyl)- ou (butyl)methacrylate, polyvinyle chlorid (PVC), poly(vinyl formal), polyester, sequenced polyetheramides, polyacrylic acid, metacrylic acid, acrylamide, itaconic acid, sulfonic acid, elastomers such as styrene-butadiene (SBR), butadiene-acrylonitrile (NBR), hydrogenated butadiene-acrylonitrile (HNBR) or mixtures thereof, and cellulose derivatives.

The active material of the positive electrode is not particularly limited. It can be chosen from the following groups, or the mixtures thereof:
- a compound (a) of formula LiₓM_{1-y-z-w}M'_{y}M"_{z}M‴_{w}O₂ (LMO₂) where M, M', M" and M‴ are chosen from the group consisting in B, Mg, Al, Si, Ca, Ti, V, Cr, Mn, Fe, Co, Ni, Cu, Zn, Y, Zr, Nb, W and Mo provided at least one of M or M' ou M" or M‴ is chosen from Mn, Co, Ni, and Fe ; M, M', M" et M‴ being different from each other; and 0,8≤x≤1,4 ; 0≤y≤0,5 ; 0≤z≤0,5 ; 0≤w≤0,2 and x+y+z+w<2,1 ;

- a compound **(b)** of formula LiₓMn_{2-y-z}M'_{y}M"_{z}O₄ (LMO), where M' and M" are chosen from the group consisting in B, Mg, Al, Si, Ca, Ti, V, Cr, Fe, Co, Ni, Cu, Zn, Y, Zr, Nb and Mo ;. M' and M" being different from each other, and 1≤x≤1,4 ; 0≤y≤0,6 ; 0≤z≤0,2;
- a compound **(c)** of formula Li_{xF}e_{1-y}M_{y}PO₄ (LFMP) where M is chosen from the group consisting in B, Mg, Al, Si, Ca, Ti, V, Cr, Mn, Co, Ni, Cu, Zn, Y, Zr, Nb and Mo; and 0,8≤x≤1,2 ; 0≤y≤0,6 ;
- a compound **(d)** of formula LiₓMn_{1-y-z}M'_{y}M"_{z}PO₄ (LMP), where M' and M" are different from each other and are chosen from the group consisting in B, Mg, Al, Si, Ca, Ti, V, Cr, Fe, Co, Ni, Cu, Zn, Y, Zr, Nb and Mo, with 0,8≤x≤1,2 ; 0≤y≤0,6 ; 0,0≤z≤0,2 ;
- a compound **(e)** of formula xLi₂MnO₃; (1-x)LiMO₂ where M is an element chosen from Ni, Co and Mn and x≤1 ;
- a compound **(f)** of formula Li₁₊ₓMO_{2-y}F_{y} of cubic structure where M represents an element chosen from the group constituted by Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd and Sm and where 0 ≤ x ≤ 0,5 and 0 ≤ y ≤ 1 ;
- a compound (g) of the type LiVPO₄F (LVPF).

Preferably, active material powder of the cathode may be coated with a thin (5-10 nm) protective layer which is stable at high potentials and prevents the decomposition of sulfides contacted to the active material and the growing interface resistance. Examples of material of protective layer may include but not limited by such as LiNbO₃, Li₂ZrO₃, Li₄Ti₅O₁₂, Li₃BO₃, Li₄SiO₄, Li₅TaO₅, LiAlO₂, LiTaO₃, Li₃PO₄.

The current collector of the positive electrode layer is typically made of aluminum with carbon thin layer.

The electrolyte may or may not be solid, preferably solid. The solid electrolyte may include inorganic solid-state electrolytes such as a sulfide-based and an oxide-based, a polymeric solid electrolyte or their combinations.

According to one embodiment, the solid-state electrolyte is of the sulfide type. As solid electrolyte constituents, mention may in particular be made of sulfide compounds alone or as a mixture with other constituents, such as polymers or gels. Mention may thus be made of partially or completely crystallized sulfides as well as amorphous ones. Examples of these materials can be selected from the sulfides of composition A Li₂S - B P₂S₅ (with 0<A<1 and 0<B<1 and A + B = 1) and their derivatives (for example with doping Lil, LiBr, LiCl,...); sulfides of argyrodite structure; or having a crystallographic structure similar to the LGPS compound (Li₁₀GeP₂S₁₂), and its derivatives. The electrolytic materials may also include oxysulfides, oxides (garnet, phosphate, anti-perovskite, etc.), hydrides, polymers, gels or ionic liquids which conduct Li⁺ ions.

Examples of sulfide electrolytic compositions are described in particular in Park, K. H., Bai, Q., Kim, D. H., Oh, D. Y., Zhu, Y., Mo, Y., & Jung, Y. S. (2018). Design Strategies, Practical Considerations, and New Solution Processes of Sulfide Solid Electrolytes for All - Solid - State Batteries. Advanced Energy Materials, 1800035.

More typically, said sulfide electrolyte can be chosen from:
- all of the phases [(Li₂S)_{y} (Li₂O)ₜ(P₂S₅)_{1-y-t}]_{(1-z)}(LiX)_{z} with X representing a halogen element; 0 <y <1; 0 <z <1; 0 <t <1
- argyrodites such as Li₆PS₅X, with X = Cl, Br, I, or Li₇P₃S₁₁;
- sulfide electrolytes having the crystallographic structure equivalent to the compound Li₁₀GeP₂S₁₂;
- Li₃PS₄
- may include Li₂S-P₂S₅, LiI-Li₃PO₄-P₂S₅, Li₂S/SiS₂, LiI-Li₂S-SiS₂, LiI-Li₂S-P₂S₅, Lil-Li₂O-Li₂S-P₂S₅, LiI-Li₂S-P₂O₅, and other different doping compounds.

According to an embodiment, the solid electrolyte has Li+ ions conductivity of more than 10⁻³ S/cm at room temperature, preferably more than 10⁻² S/cm, with a transference number close to 1.0, and stability in wide voltage diapason.

According to an embodiment, the electrochemical cell is a solid-state cell, in particular with a sulfide-based electrolyte.

In all-solid-type elements, the electrolytic compounds can be included in the solid-state electrolyte layer, but can also be partially included within the electrodes.

Typically, the electrochemical element according to the invention is a "lithium free" type battery. It is understood that the term "lithium free" defines the fact that the battery initially does not contain lithium metal during the assembly of the battery, but that lithium is deposited in metallic form and then consumed in a controlled and reversible manner in situ during battery operation. Typically, lithium is deposited within the negative electrode during charge and consumed during discharge.

According to another object, the present invention also relates to an electrochemical module comprising the stack of at least two elements according to the invention, each element being electrically connected with one or more other element (s).

The term "module" therefore designates here the assembly of several electrochemical elements, said assemblies possibly being in series and / or parallel.

According to a still further object, the present invention concerns a battery comprising at least 2 electrochemical cells of the invention connected with each other, or one or more modules of the invention.

By "battery" or accumulator is meant the assembly of several cells according to the invention.

### Figures

Figure 1 shows an example of a Li-free negative electrode of the invention, with its initial structure (A), and changes after 1^{st} charge (B) and discharge (C), during cycling (D).
Figure 2 are scanning electron and optical images of a Li-free negative electrode with deposited layers.
Figure 3 illustrates the initial charge of a solid-state cell with various Li-free negative electrodes (Current density 200 µA/cm²).

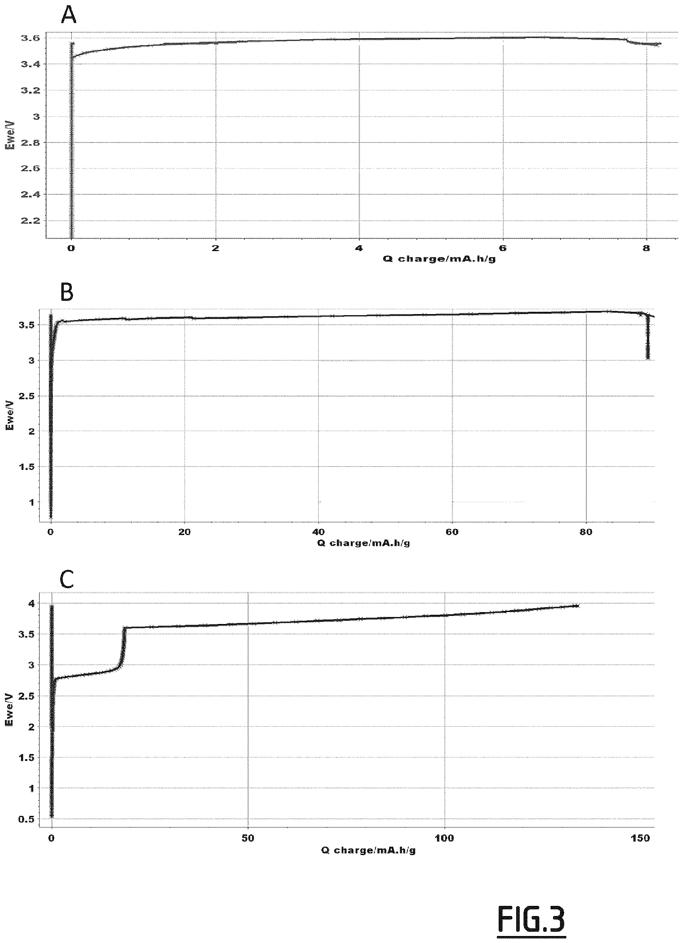

Figure 3 illustrates a solid-state cell with a Li-free negative electrode based on a Zn layer + Bi layer, during continued cycling at high current densities during charge (Capacity 2,7 mAh/cm²⁾.

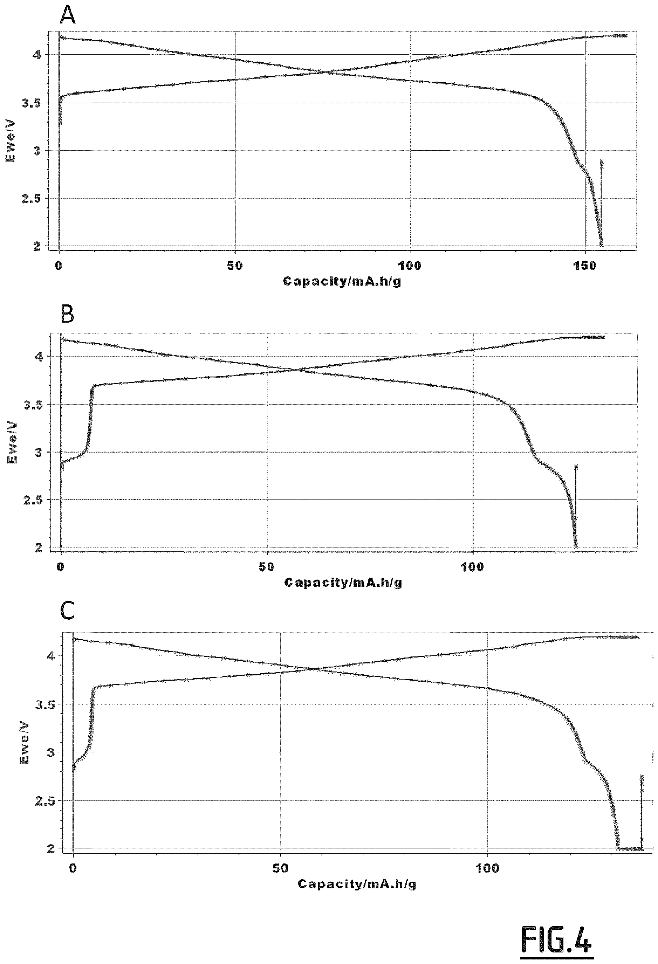

Figure 4 illustrates the charge - discharge profiles with increasing current densities of charge.

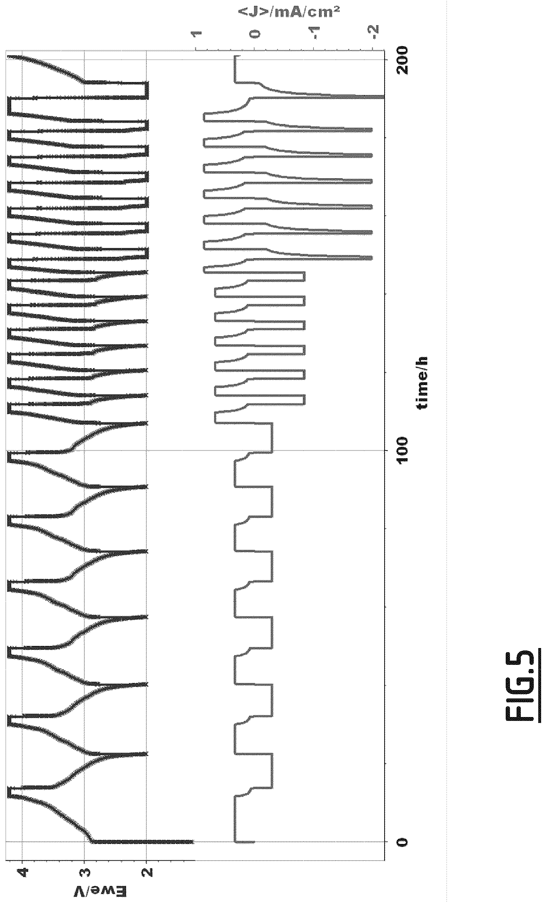

Figure 5 illustrates a solid-state cell with a Li-free negative electrode based on 3 metal layers Zn/Sn/Bi, during cycling with increasing current densities during charge and discharge.

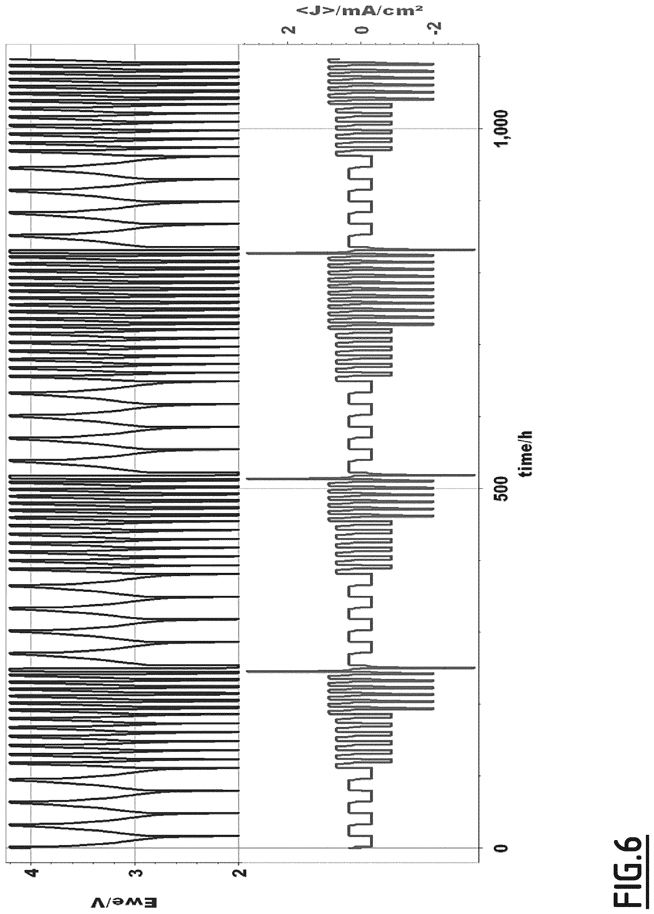

Figure 6 illustrates a solid-state cell with a Li-free negative electrode and increased loading/ Capacity 4.3 mAh/cm² during cycling with increasing current densities.

The following examples are offered for illustration purposes and do not represent all possibilities encompassed by the present invention.

### Example 1 : Zn/Bi

A Li-free negative electrode was assembled as follows :
A layer of Zn which has lithiation potential 0.157 V vs metal Li was deposited directly on Cu current collector by electroplating and then, a layer of Bi which has lithiation potential 0.82 V vs metal Li was deposited on top of Zn layer by slurry coating of nanoparticles with size from 30 nm up to 100 nm, preferably 50nm.

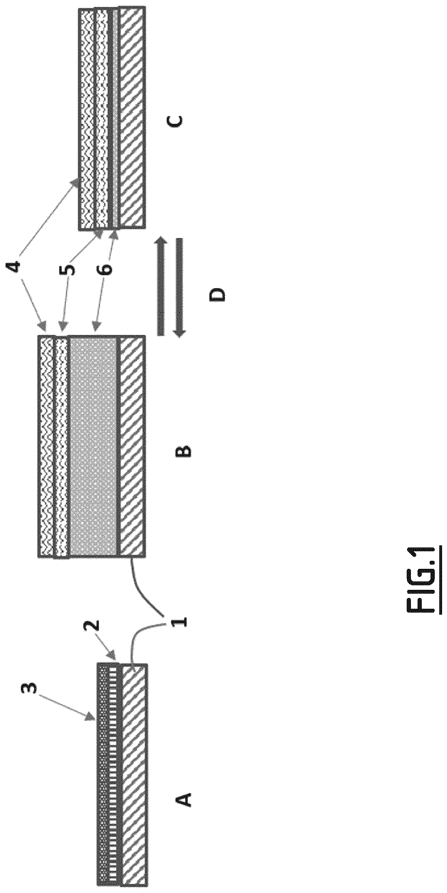

Its initial structure and its change during cycling is illustrated in Figure 1.

In Figure 1, (A) depicts its initial structure, (B) depicts the structure after the 1^{st} charge and (C) after the discharge, where (B) and (C) are reversibly achieved during the following cycling (D).

As illustrated in Figure (1A), a representative negative electrode in its initial stage comprises a current collector (1) in the form of a Cu foil, coated with the layer (1) depicted by figure (2)), which can comprise typically Zn. On the top of this layer is further coated the second layer (2) (depicted by figure (3)) which can typically be made of Bi.

During the first charge the initial Bi/Li alloy is formed at potential below 0.82V, after full lithiation of Bi the potential decreased to the level where the lithiation of Zn started. After that lithium is plated to current collector.

After the first cycling (B), metal lithium is deposited on the current collector in the form of a metal layer (6), whereas the first and second layers are lithiated and comprise lithium alloys, said alloys being formed with their respective constitutive metals. The first layer (2) becomes thus lithiated into alloy layer (5), and the second layer (3) becomes lithiated alloy layer (4).

After discharge (C), the layer (6) of metal lithium is substantially consumed, and the first and second layers (5) and (6) substantially unchanged or becomes partially lithiated if all metal lithium is consumed.

The structures depicted in (B) and (C) are obtained reversibly after each cycling.

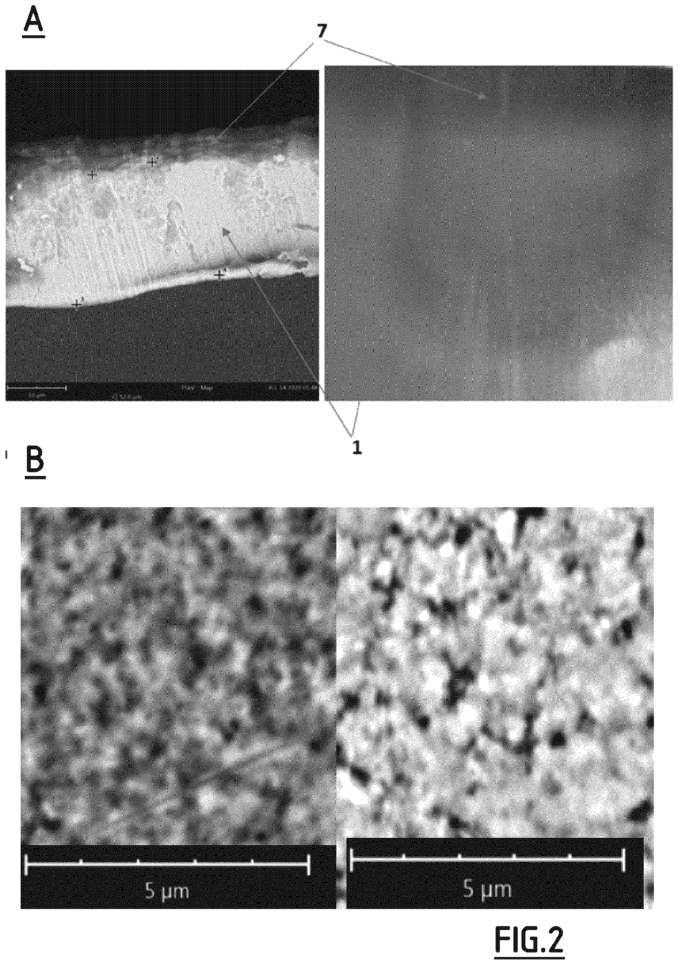

On Figure 2A, it is apparent that the current collector (Cu foil) (1) is coated with deposited layers (7). On Figure 2B, the surface of the initial Cu foil and the surface of the foil coated with the deposited layers are pictured (E and F, respectively).

The thickness of each deposited layer is about 1 µm and it is enough to create layers of alloys that prevent lithium dendrite formation and prevent reactivity with electrolytes.

### Example 2: comparison of 2 layers Zn/Bi with one Zn layer and no addition layer

Electrochemical cells were prepared with the negative electrodes with different configurations and compositions of layers (2) and (3) as depicted in Figure 1 above, with a NMC positive electrode (Nickel Manganese Cobalt oxide), with a sulfide electrolyte and sulfide solid-state electrolyte as separator.

Cathode composite powder comprises a positive electrode active material (LiNi_{0.8}Mn_{0.1} Co_{0.1}O₂ ), a sulfide-based solid electrolyte, and a conductive material at a mass ratio 70:25:5.

A press die with ceramic liner and diameter 15 mm was used for electrochemical cells assembling. Initially 70-100 mg of the sulfide-based solid electrolyte powder was evenly spread inside the die and slightly pressed to form a dense pellet. After that, the cathode composite powder was added on one side in an amount corresponding to the required capacity (from 3 up to 4.5 mAh/cm²). A negative electrode disk was added on the opposite side of solid electrolyte pellet.

Finally, the electrochemical sell was compacted by warm pressing at 4.6-5 ton/cm² and temperature 60-100 °C for 5 min. The press die was fixed in fixture and electrochemical testing started at 20 °C with low current density at 1^{st} cycle (200 µA/cm²).

As apparent from Figure 3A, during the first charge with relatively low current density (200 µA/cm²) the Copper foil as current collector without any additional layers creates dendrites almost immediately after about 2 hours (10 % of total charge time) or about 8 mAh/g when the cell potential starts to decreasing in result of partial short-circuit after reaching 3.6 V vs Li.

The coating of one layer of Zn on the top of the Cu foil (Figure 3B) improves the charge but does not solve the issue. The dendrites appeared only after 8 hours or 85 mAh/g of initial charge.

The addition of a further layer (Bi) on the top of the Zn layer creates a system described in example which fully solves the issue with dendrite formation (Figure 3C) : During the first charge, the characteristic for Bi plateau appeared and the cell can be charged without dendrite formation and charge and discharge capacities fully corresponded to amount of active material and its theoretical capacity without any evidence of dendrites formation.

It was further demonstrated that the negative electrode of the invention makes it possible to further increase the current densities during charge as apparent from Figure 4 illustrates the charge - discharge profiles where current density of charge increased - ; 370 µA/cm² Fig.4a; 568 µA/cm² Fig.4b; and 1.1 mA/cm² Fig.4c respectively. Figure 4 demonstrates that the proposed 2 layers configuration not only prevents dendrite formation at low current densities but also gives possibility to increase current density and decrease charge time.

### Example 3: 3 layers Zn/Sn/Bi and 2 layers Zn+Sn alloy/Bi

Negative electrodes were prepared according to two embodiments: either 3 layers (successive layers of Zn, Sn and Bi, respectively, in this order) or 2 layers (successive layers of Zn-Sn alloy and Bi, respectively, in this order) were coated on the current collector. In this case, the alloy layer may be obtained by the standard Eastwood Electroplating Tin-Zinc System.

The two systems similarly protect the anode from dendrite formation

### Example 4: Zn+Sn alloy/Pb/Bi

Cells with negative electrodes with three layers (Zn+Sn alloy/Pb/Bi) NMC based cathodes and sulfide solid-state electrolyte were also prepared. The results illustrated in Figures 5 and 6 demonstrated that high current densities 3.2 mA/cm² can be achieved at charge without dendrites formation for cells with high loading (4.3 mAh/cm²) and bigger amount of lithium transferred between electrodes during charge/discharge cycles.

Results are summarized in the table below:

| | _{charge Current Density} µA/cm² | Cell Capacity Q, mAh/cm² | Q_{charge} short circuit, mAh/cm² | # of cycles before short circuit | Comment |
|---|---|---|---|---|---|
| Cu | 200 | 3.2 | 0.44 | 0 | Short circuited during initial charge |
| Cu/Zn | 200 | 3.2 | 2.9 | 0 | |
| Cu/Bi | 200 | 3.1 | - | 5-8 | Short circuited during CV charge |
| Cu/Zn/Bi | 200 | 3.1 | - | >300* | Not Short circuited |
| Cu/Zn/Bi | 1100 | 4.3 | - | >300* | Not Short circuited |
| Cu/Zn/Sn/Bi and Cu/Zn+Sn alloy/Bi | 2000 | 4.3 | | >300* | Not Short circuited |
| Cu/Zn+Sn alloy/Pb/Bi | 3200 | 4.5 | - | >300* | Not Short circuited |

| | | | | | |
|---|---|---|---|---|---|
| * Cycleability is limited by cathode materials | | | | | |

## Claims

1. A negative electrode of an electrochemical cell comprising :
a current collector,
a number (n) of successively coated layers over the surface of the current collector, the successive coated layers being numbered (i), i being comprised between 1 and n, in this order from the current collector surface, wherein the layer (1) is the closest layer respective to the current collector and the layer (n) is the furthest layer respective to the current collector;
wherein n is an integer, equal to or greater than 2, and equal to or lower than 4,
wherein the layer (n) has an outer face and an inner face on the opposite side,
**characterized in that** each of the n coated layers, identical or different comprises one or more metals and/or metal alloys and/or metalloids and/or metalloid alloys,
**in that** the inner face of the layer (n) is in contact with the (n-1) layer immediately located beneath it; and **in that**
the n layers are arranged so that layer (i+1) has a higher potential of lithiation than that of layer (i) which is immediately beneath it,
wherein the layer (n) comprises one or more metals selected from bismuth, indium, antimony and/or their alloys, and
the layer (1) closest to the current collector comprises one or more metals selected from zinc, magnesium and/or their alloys.

2. The negative electrode according to claim 1, which is initially lithium-free in that it does not comprise lithium before its first cycling.

3. The negative electrode according to claim 1 or 2, which stores lithium after the first cycling :
- in the form of a lithiated metal alloy within at least one of the coated layers and/or
- in the form of a layer of elemental lithium coated between the current collector and the closest layer (1).

4. The negative electrode according to anyone of the preceding claims wherein each layer comprises one or more metals and/or alloys and/or metalloids and/or metalloids alloys selected from Mg, Al, Zn, Cd, Ti, Cr, Mn, Co, Fe, Ag, Au, In, Sn, Pb, Bi, Sb, Si, B, and the alloys thereof.

5. The negative electrode according to anyone of the preceding claims wherein each layer has a thickness comprised between 0.05 and 20 µm, preferably between 0.2 and 10 µm.

6. The negative electrode according to anyone of the preceding claims wherein n is 2.

7. The negative electrode according to anyone of the preceding claims wherein the outer face of layer (n) has an increased surface area.

8. The negative electrode according to anyone of the preceding claims wherein the current collector consists in a material or alloy chosen from the group consisting in copper, nickel, carbon, stainless steel, and the alloys thereof, in shape of foil, mesh, woven or non woven.

9. Process of manufacture of the negative electrode according to anyone of the preceding claims wherein it comprises :
- Coating the closest layer (1) on the current collector, and
- successively coating each following coated layer (i) until layer (n) is coated, and wherein each coating step is identical or different.

10. An electrochemical cell comprising :
- A positive electrode ;
- A negative electrode according to anyone of claims 1 to 8; and
- A solid-state electrolyte layer as a separator between the positive and the negative electrodes.

11. The electrochemical cell according to claim 10 which is a solid-state cell with sulfide-based electrolyte.

12. An electrochemical module comprising at least two cells as defined in claim 10 or 11, each cell being electrically connected with one or more cell(s).

13. A battery comprising at least 2 electrochemical cells according to claim 10 or 11 connected with each other, or one or more modules according to claim 12.

## Patentansprüche

1. Negative Elektrode einer elektrochemischen Zelle, umfassend:
einen Stromabnehmer,
eine Anzahl (n) von aufeinanderfolgend beschichteten Schichten auf der Oberfläche des Stromabnehmers, wobei die aufeinanderfolgenden beschichteten Schichten nummeriert sind (i), wobei i zwischen 1 und n liegt, in dieser Reihenfolge von der Stromabnehmeroberfläche aus, wobei die Schicht (1) die dem Stromabnehmer am nähesten liegende Schicht und die Schicht (n) die von dem Stromabnehmer am weitesten entfernte Schicht ist;
wobei n eine ganze Zahl ist, die gleich wie oder größer als 2 und gleich wie oder kleiner als 4 ist,
wobei die Schicht (n) eine Außenfläche und eine Innenfläche auf der gegenüberliegenden Seite aufweist,
**dadurch gekennzeichnet, dass** jede der n beschichteten Schichten, die identisch oder verschieden sind, ein oder mehrere Metalle und/oder Metalllegierungen und/oder Metalloide und/oder Metalloidlegierungen umfasst, dass die Innenseite der Schicht (n) mit der unmittelbar darunter liegenden Schicht (n-1) in Kontakt ist und dass
die n Schichten angeordnet sind, sodass die Schicht (i+1) ein höheres Lithiierungspotenzial aufweist als die unmittelbar darunter liegende Schicht (i),
wobei die Schicht (n) ein oder mehrere Metalle, ausgewählt aus Wismut, Indium, Antimon und/oder deren Legierungen, umfasst, und
die dem Stromabnehmer am nächsten liegende Schicht (1) ein oder mehrere Metalle, ausgewählt aus Zink,
Magnesium und/oder deren Legierungen umfasst.

2. Negative Elektrode nach Anspruch 1, die anfänglich lithiumfrei ist, da sie vor dem ersten Zyklus kein Lithium umfasst.

3. Negative Elektrode nach Anspruch 1 oder 2, die nach dem ersten Zyklus Lithium speichert:
- in Form einer lithiumhaltigen Metalllegierung in mindestens einer der beschichteten Schichten und/oder
- in Form einer Schicht aus elementarem Lithium zwischen dem Stromabnehmer und der nächstgelegenen Schicht (1)..

4. Negative Elektrode nach einem der vorherigen Ansprüche, wobei jede Schicht ein oder mehrere Metalle und/oder Legierungen und/oder Metalloide und/oder Metalloid-Legierungen, ausgewählt aus Mg, Al, Zn, Cd, Ti, Cr, Mn, Co, Fe, Ag, Au, In, Sn, Pb, Bi, Sb, Si, B und deren Legierungen, umfasst.

5. Negative Elektrode nach einem der vorherigen Ansprüche, wobei jede Schicht eine Stärke zwischen 0,05 und 20 µm, vorzugsweise zwischen 0,2 und 10 µm aufweist.

6. Negative Elektrode nach einem der vorherigen Ansprüche, wobei n 2 ist.

7. Negative Elektrode nach einem der vorherigen Ansprüche, wobei die Außenfläche der Schicht (n) eine vergrößerte Oberfläche aufweist.

8. Negative Elektrode nach einem der vorherigen Ansprüche, wobei der Stromabnehmer aus einem Material oder einer Legierung besteht, das/die ausgewählt ist aus der Gruppe, bestehend aus Kupfer, Nickel, Kohlenstoff, rostfreiem Stahl und deren Legierungen, in Form einer Folie, eines Netzes, gewebt oder nicht gewebt.

9. Verfahren zum Herstellen der negativen Elektrode nach einem der vorherigen Ansprüche, **dadurch gekennzeichnet, dass** es Folgendes umfasst:
- Beschichten der nächstgelegenen Schicht (1) auf dem Stromabnehmer, und
- aufeinanderfolgendes Beschichten jeder folgenden beschichteten Schicht (i), bis die Schicht (n) beschichtet ist, wobei jeder Beschichtungsschritt gleich oder verschieden ist.

10. Elektrochemische Zelle, umfassend:
- eine positive Elektrode;
- eine negative Elektrode nach einem der Ansprüche 1 bis 8, und
- eine Festkörperelektrolytschicht als Separator zwischen der positiven und der negativen Elektrode.

11. Elektrochemische Zelle nach Anspruch 10, die eine Festkörperzelle mit Elektrolyt auf Sulfidbasis ist.

12. Elektrochemisches Modul, umfassend mindestens zwei Zellen nach Anspruch 10 oder 11, wobei jede Zelle elektrisch mit einer oder mehreren Zellen verbunden ist.

13. Batterie, umfassend mindestens 2 miteinander verbundene elektrochemische Zellen nach Anspruch 10 oder 11 oder ein oder mehrere Module nach Anspruch 12.

## Revendications

1. Electrode négative d'une cellule électrochimique comprenant :
un collecteur de courant,
un nombre (n) de couches revêtues successivement sur la surface du collecteur de courant, les couches revêtues successives étant numérotées (i), i étant compris entre 1 et n, dans cet ordre à partir de la surface du collecteur de courant, dans laquelle la couche (1) est la couche la plus proche du collecteur de courant et la couche (n) est la couche la plus éloignée du collecteur de courant ;
dans laquelle n est un nombre entier, égal ou supérieur à 2, et égal ou inférieur à 4,
dans laquelle la couche (n) présente une face externe et une face interne sur le côté opposé,
**caractérisée en ce que** chacune des n couches revêtues, identiques ou différentes, comprend un ou plusieurs métaux et/ou alliages métalliques et/ou métalloïdes et/ou alliages métalloïdes, **en ce que** la face interne de la couche (n) est en contact avec la couche (n-1) située immédiatement au-dessous d'elle ; et **en ce que**
les n couches sont agencées de sorte que la couche (i+1) ait un potentiel de lithiation plus élevé que celui de la couche (i) qui lui est immédiatement au-dessous d'elle,
dans laquelle la couche (n) comprend un ou plusieurs métaux choisis parmi le bismuth, l'indium, l'antimoine et/ou leurs alliages, et
la couche (1) la plus proche du collecteur de courant comprend un ou plusieurs métaux choisis parmi le zinc,
le magnésium et/ou leurs alliages.

2. Electrode négative selon la revendication 1, qui est initialement exempte de lithium en ce sens qu'elle ne contient pas de lithium avant son premier cycle.

3. Electrode négative selon la revendication 1 ou 2, qui stocke le lithium après le premier cycle :
- sous la forme d'un alliage métallique lithié dans au moins une des couches revêtues et/ou
- sous la forme d'une couche de lithium élémentaire déposée entre le collecteur de courant et la couche la plus proche (1).

4. Electrode négative selon l'une quelconque des revendications précédentes, dans laquelle chaque couche comprend un ou plusieurs métaux et/ou alliages et/ou métalloïdes et/ou alliages de métalloïdes choisis parmi Mg, Al, Zn, Cd, Ti, Cr, Mn, Co, Fe, Ag, Au, In, Sn, Pb, Bi, Sb, Si, B, et leurs alliages.

5. Electrode négative selon l'une quelconque des revendications précédentes dans laquelle chaque couche a une épaisseur comprise entre 0,05 et 20 µm, de préférence entre 0,2 et 10 µm.

6. Electrode négative selon l'une quelconque des revendications précédentes, dans laquelle n est 2.

7. Electrode négative selon l'une quelconque des revendications précédentes, dans laquelle la face externe de la couche (n) présente une surface accrue.

8. Electrode négative selon l'une quelconque des revendications précédentes, dans laquelle le collecteur de courant est constitué d'un matériau ou d'un alliage choisi dans le groupe constitué par le cuivre, le nickel, le carbone, l'acier inoxydable et leurs alliages, sous la forme d'une feuille, d'une maille, tissée ou non-tissée.

9. Procédé de fabrication de l'électrode négative selon l'une quelconque des revendications précédentes dans lequel il comprend :
- le revêtement de la couche la plus proche (1) sur le collecteur de courant, et
- le revêtement successif de chaque couche revêtue (i) suivante jusqu'à ce que la couche (n) soit revêtue, et dans lequel chaque étape de revêtement est identique ou différente.

10. Cellule électrochimique comprenant :
- une électrode positive ;
- une électrode négative selon l'une quelconque des revendications 1 à 8, et
- une couche d'électrolyte à l'état solide servant de séparateur entre les électrodes positive et négative.

11. Cellule électrochimique selon la revendication 10, qui est une cellule à l'état solide avec un électrolyte à base de sulfure.

12. Module électrochimique comprenant au moins deux cellules selon la revendication 10 ou 11, chaque cellule étant connectée électriquement à une ou plusieurs cellule(s).

13. Batterie comprenant au moins 2 cellules électrochimiques selon la revendication 10 ou 11 connectées entre elles, ou un ou plusieurs modules selon la revendication 12.
